# EUROPÄISCHE PATENTSCHRIFT

(11) **EP 3 047 141 B1**
(45) Veröffentlichungstag und Bekanntmachung des Hinweises auf die Patenterteilung: **25.10.2017**
(21) Anmeldenummer: 14793437.6
(22) Anmeldetag: 19.09.2014
(51) Int. Cl.: F03D 1/06

(54) **ROTORBLATT FÜR EINE WINDENERGIEANLAGE, ROTORNABE, ANTRIEBSSTRANG, MASCHINENHAUS, WINDENERGIEANLAGE UND WINDENERGIEANLAGENPARK**
ROTOR BLADE FOR A WIND TURBINE, ROTOR HUB, DRIVE TRAIN, NACELLE, WIND TURBINE AND WIND TURBINE FARM
PALE DE ROTOR POUR ÉOLIENNE, MOYEN DE ROTOR, CHAÎNE CINÉMATIQUE, NACELLE, ÉOLIENNE ET PARC D'ÉOLIENNES

(30) Priorität: 20.09.2013 DE 202013104310 U
(43) Veröffentlichungstag der Anmeldung: 27.07.2016
(73) Patentinhaber: Rohden, Rolf, 26607 Aurich (DE)
(72) Erfinder: Rohden, Rolf, 26607 Aurich (DE)
(74) Vertreter: Weidner Stern Jeschke
(86) Internationale Anmeldenummer: PCT/DE2014/100337
(87) Internationale Veröffentlichungsnummer: WO 2015/039650

(56) Entgegenhaltungen:
- WO-A1-2005/019642
- GB-A- 2 479 380
- US-A- 5 660 527
- US-A1- 2010 296 932
- US-A1- 2013 243 598

## Beschreibung

Die Erfindung betrifft ein Rotorblatt für eine Windenergieanlage, eine Rotornabe, einen Antriebsstrang, ein Maschinenhaus sowie eine Windenergieanlage und einen Windenergieanlagenpark.

Üblicherweise wird ein Rotorblatt mit einer Rotornabe einer Windkraftanlage oder Windenergieanlage durch lösbare feste Verbindung beispielsweise mittels Schrauben oder durch Einkleben verbunden. Hierbei können jedoch Übergangsprobleme aufgrund der Verbindung von unterschiedlichen Materialien auftreten. Dies ist ein häufiges Problem, da üblicherweise die Rotorblätter aus glasfaser- oder kohlefaserverstärktem Kunststoff hergestellt werden, während die Rotornaben aus Metall gefertigt sind.

Zur optimalen Windausnutzung kann ein Rotorblatt in Bezug auf die Rotornabe gedreht (gepitch) werden. Die Komponenten zur Blattverstellung werden insbesondere in der Rotornabe untergebracht. Hierzu werden große, elektrische oder hydraulische Stellmotoren eingesetzt, welche im Allgemeinen durch eine motorbetriebene Zahnradverbindung (in Folge Getriebe genannt) dem Rotorblatt einen Pitch-Winkel aufprägen. Derartige Antriebe sind aufwändig und auch hier treten Schwierigkeiten durch die unterschiedlichen Materialien von Rotorblatt und Rotornabe auf.

Die DE 733 566 offenbart einen bespannten, drehbaren Windradflügel mit einer Rute, welche an einem Nabenkörper fest eingespannt ist. Zur Flügelverstellung enthält die Rute ein inneres Verstellrohr. An der Flügelspitze ist im Kopf des Steuerrohrs ein Gelenk für die leichte Drehbarkeit des Flügels angeordnet. Diese Ausführungsform ist für moderne Rotorblätter nicht geeignet.

In der DE 28 25 061 C2 sind die Flügel mittels Kugellager in einer Nabe drehbar aufgehängt, in welcher sich auch das hydraulische Leistungs-Verstellsystem befindet.

Die DE 100 11 464 C1 beschreibt ein Stellantrieb-Schwenklager, welches zwischen Nabenstutzen und Rotorblatt fest verschraubt ist. Die Einstellung des Rotorblatt-Pitch-Winkels erfolgt konventionell über einen Elektromotor, welcher zusammen mit dem Getriebe an einer dem Nabenstutzen fest verbundenen Halterung befestigt ist.

In der AT 384 657 B wird eine mechanisch-betätigte Flügelverstelleinrichtung durch Fliehgewichte in der Nabe offenbart, welche über ein Hebelsystem mit dem Verstellgetriebe im Flügel verbunden sind. Das Dokument GB2479380 offenbart ein Rotorblatt gemäß dem Oberbegriff des Anspruchs 1.

Aufgabe der Erfindung ist es, den Stand der Technik zu verbessern.

Gelöst wird die Aufgabe durch ein Rotorblatt für eine Windenergieanlage, wobei das Rotorblatt eine rotorblattseitige Pitch-Zapfenaufnahme aufweist und in einem eingebauten Zustand in der rotorblattseitigen Pitch-2apfenaufnahme ein Pitch-Zapfen einer Rotornabe mittels eines Lagers gelagert ist, sodass eine feste Verbindung zwischen dem Rotorblatt und der Rotornabe durch das Lager erfolgt, um eine auf das Rotorblatt wirkende Kraft auf einen der Rotornabe nachfolgenden Generator zur Umwandlung in elektrische Energie zu übertragen.

Durch die vorgeschlagene Lösung können das Rotorblatt und die Rotornabe aus unterschiedlichen Materialien gefertigt sein, ohne dass es zu Übergangsproblemen zwischen den Materialien kommt. Somit wird die Fertigung flexibler und kann kostengünstiger durchgeführt werden.

Dadurch wird es möglich, Bestandteile der Windenergieanlage auch aus bisher nicht verwendeten Materialien zu fertigen, zum Beispiel die Rotorblätter aus Metall.

Zudem können so elektrische Bauteile hauptsächlich in der Rotornabe verortet werden und die passiven Bauteile sich rotorblattseitig befinden.

Folgendes Begriffliche sei erläutert.

Ein "Rotorblatt" umfasst insbesondere das Blatt einer Windenergieanlage. Durch das Rotorblatt wird insbesondere die auf das Rotorblatt wirkende Kraft insbesondere des Windes als Bewegungsenergie an die Rotornabe übertragen. Das Rotorblatt ist insbesondere ein zu pitchendes Blatt, sodass diesem Blatt eine Drehung aufgeprägt werden kann. Dadurch wird das Rotorblatt den Windverhältnissen, dem Energieertrag und/oder der Drehzahl des Generators angepasst.

Wie bei modernen Rotorblättern üblich, kann das Rotorblatt glasfaserverstärktem Kunststoff aufweisen. Bei langen Rotorblättern und/oder hohen Belastungen kann das Rotorblatt auch Kohlenstofffasern enthalten. Maximale Blattlängen können derzeit bei rund 65 bis 85 m liegen, wobei auch längere und kürzere Rotorblätter realisierbar sind. Um Schäden durch Blitzschläge zu vermeiden, kann das Rotorblatt mit Blitzableitern ausgerüstet sein.

Die "Rotornabe" ist insbesondere die Rotornabe einer Windkraftanlage, an welcher die einzelnen Rotorblätter befestigt sind. An einer Rotornabe können mehrere Rotorblätter, insbesondere drei Rotorblätter, befestigt sein. Die Rotornabe ist vorliegend insbesondere die erste Komponente eines mechanischen Antriebsstranges. Die Rotornabe leitet die Bewegungsenergie von den Rotorblättern an den Generator weiter. Insbesondere wenn der Antriebsstrang ein Getriebe aufweist, ist die Rotornabe mit der drehenden Rotorwelle des Getriebes verbunden, wodurch die Drehzahl der Rotornabe in eine höhere Drehzahl umgewandelt wird. Bei einem getriebelosen Antriebsstrang überträgt die Rotornabe die Energie insbesondere direkt auf den Generator, welcher insbesondere als Ringgenerator ausgestaltet ist. Die Rotornabe kann üblicherweise aus Metallen, insbesondere Stahlguss oder spezieller Kugelgrafitguss, oder, wie in älteren Anlagen üblich, aus Stahlblech oder Schmiedeteile bestehen.

Der "Pitch-2apfen" ist insbesondere ein zylindrisches Verbindungselement zwischen Rotorblatt und Rotornabe. Der Pitch-Zapfen ist insbesondere um eine Pitch-Achse angeordnet. Der Pitch-Zapfen kann einstückig oder verbunden mit der Rotornabe ausgestaltet sein, sodass Kräfte optimal aufgeprägt oder abgeführt werden können. Mithin ist der Pitch-Zapfen sowohl im Durchmesser als auch in der Länge so ausgestaltet, dass dieser das eigentliche Blatt des Rotorblattes auch bei hohen Windbelastungen tragen kann. Auch kann der Pitch-Zapfen verbunden mit dem Rotorblatt und/oder der rotorblattseitigen Pitch-Zapfenaufnahme des Rotorblattes ausgestaltet sein.

Die "rotorblattseitige Pitch-Zapfenaufnahme" ist insbesondere ein Raum im Rotorblatt, in dem der Pitch-Zapfen eingeführt und befestigt werden kann. In der rotorblattseitigen Pitch-Zapfenaufnahme ist der Pitch-Zapfen insbesondere gelagert. An der rotorblattseitigen Pitch-Zapfenaufnahme können ein oder mehrere Lager befestigt sein. Auch kann die rotorblattseitige Pitch-2apfenaufnahme weitere Bauteile, wie beispielsweise einen Pitch-Antrieb, aufweisen.

Unter einem "Lager" wird insbesondere ein Element zum Führen gegeneinander beweglicher Bauteile verstanden. Vorliegend soll das Lager zusätzlich eine Haltefunktion erfüllen, die Rotation ermöglichen und dabei unerwünschte Bewegungen verhindern oder reduzieren. Optimal nimmt das Lager gleichzeitig wirkende radiale und axiale Belastungen auf. Für die Lager können insbesondere Schräglager verwendet werden.

Ein "Generator" hat insbesondere die Aufgabe eine mechanische Drehbewegung in elektrische Leistung umzuwandeln. Hierzu können insbesondere Drehstrom-Asynchron- oder Synchron-Generatoren eingesetzt werden.

Unter einem "eingebauten Zustand" wird insbesondere der Zustand nach der Montage des Pitch-Zapfens zur festen Verbindung an das Rotorblatt und/oder die Rotornabe verstanden. Vorzugsweise ist der eingebaute Zustand die betriebsfertige Montage des Rotorblattes, des Pitch-Zapfen und der Rotornabe in einer festen Verbindung. Dies bedeutet jedoch nicht, dass für die Realisierung dieser Ausführungsform die gesamte Windenergieanlage in einem einsatzfähigen Zustand vorliegen muss.

Ein wesentlicher Kern der Erfindung beruht darauf, dass, entgegen dem angegebenen Stand der Technik, die feste Verbindung zwischen Rotorblatt und Rotornabe im Wesentlichen durch ein Lager oder mehrere Lager erfolgt. Somit kann auf ein Verschrauben oder Verkleben zwischen Rotorblatt und Rotornabe verzichtet werden. Folglich ist diese feste Verbindung frei von Flanschen, Nieten, Schrauben oder sonstigen bisher üblichen Verbindungsmitteln.

Zudem treten auch keine Übergangsprobleme zwischen unterschiedlichen Materialien auf, welche sonst zwischen dem Rotorblatt und der Rotornabe üblich sind, da das Lager zum einen an die Anforderungen des Pitch-Zapfens und zum anderen an die Anforderungen der rotorblattseitigen Pitch-2apfenaufnahme ausgestaltet werden kann. Dadurch können in einfacherer und funktionsstabiler Weise unterschiedliche Materialien ohne Einschränkungen durch die Verbindung für die Fertigung des Rotorblattes und der Rotornabe verwendet werden.

Während in der üblichen Verbindungsweise insbesondere an der Verklebung zweier unterschiedlicher Materialien eine Bruchstelle bei hohen Belastungen auftreten kann, ist ein Materialversagen bei der festen Verbindung durch Lager zwischen den unterschiedlichen Materialien aufgrund der Kräfteaufnahme des Lagers ausgeschlossen.

In einer weiteren Ausführungsform weist das Rotorblatt ein Lager, insbesondere Schräglager, auf, sodass in dem eingebauten Zustand die feste Verbindung zwischen dem Rotorblatt und der Rotornabe durch das Lager erfolgt.

Unter "Schräglager" wird insbesondere ein Lager verstanden, welches Kräfte aufnehmen kann, deren Wirkungslinien nicht exakt senkrecht zur Achse verlaufen, sondern schräg in einem bestimmten Winkel zur Achse auftreffen. Das Schräglager kann eine Haltefunktion realisieren und ermöglicht die Rotation des Rotorblatts in Bezug zum Pitch-Zapfen.

Die Verwendung eines Schräglagers ist vorteilhaft, da dieses auch Kräfte aufnimmt, welche schräg zur Rotationsachse auftreffen. Somit ist eine feste Verbindung zwischen Rotorblatt und Rotornabe gewährleistet. Dadurch können die wirkenden Kräfte optimal von der Rotornabe auf die Rotorwelle als Drehbewegung oder direkt über die Rotornabe auf den Generator übertragen werden.

Um eine optimale Übertragung der Kraft durch eine gelagerte Verbindung zwischen Rotorblatt und Pitch-Zapfen auf die Rotornabe zu erzielen, kann das Rotorblatt den Pitch-Zapfen aufweisen, sodass in dem eingebauten Zustand das Rotorblatt und die Rotornabe über den Pitch-Zapfen fest verbunden sind.

Die rotorblattseitige Pitch-Zapfenaufnahme und der Pitch-Zapfen können unterschiedliche Materialien aufweisen.

Dadurch können für die Funktion und die Belastung optimale unterschiedliche Materialien für die rotorblattseitige Pitch-Zapfenaufnahme und für den Pitch-Zapfen gewählt werden. Auch kann somit ein einsatzfähiges Rotorblatt mit einer metallischen Außenhülle erstmals sinnvoll verwendet werden.

Zum Beispiel kann die rotorblattseitige Pitch-2apfenaufnahme aus einem Metallblech geschaffen sein und fest in das Rotorblatt eingeklebt werden. Somit ist eine sehr stabile Halterung für beispielsweise die Lager gegeben. Dagegen kann der Pitch-Zapfen aus demselben Material wie die Rotornabe, zum Beispiel aus Stallguss, gefertigt sein.

Eine besondere Ausführungsform der Erfindung ist, dass das Rotorblatt im Wesentlichen Metall und/oder Metalllegierung aufweist.

Unter "im Wesentlichen" wird vorliegend insbesondere verstanden, dass der Anteil an Metall und/oder Metalllegierungen mindestens 50% an den gesamten Materialien der Außenhülle des Rotorblattes ist.

Wie eingangs beschrieben, werden Rotorblätter üblicherweise aus faserverstärktem Kunststoff hergestellt, wobei aufwändig verschiedene Schichten aufgetragen werden müssen.

Erstmalig wird hier ein für Windenergieanlagen verwendbares Rotorblatt aus im Wesentlichen Metall offenbart, insbesondere für Rotorblätter mit einer Länge größer als 30 m.

Vorteilhaft ist es, wenn das Metall und/oder die Legierung pressbar ist. Beispielsweise kann das pressbare Leichtmetall Aluminium zur Rotorblattproduktion verwendet werden. Auch können Stahlbleche eingesetzt werden, welche durch die Legierungsbestandteile in ihren Eigenschaften verändert werden können. Zum Beispiel kann das Stahlblech durch die Legierung biegsamer werden.

Die Fertigung des Rotorblattes aus Metall und/oder Metalllegierung wird insbesondere dadurch ermöglicht, dass der Pitch-Zapfen in der rotorblattseitigen Pitch-Zapfenaufnahme des Rotorblattes durch Lager fest verbunden wird. Somit liegen keine Übergangsprobleme zwischen unterschiedlichen Materialien vor und das Material des Rotorblattes kann frei gewählt werden.

Ebenso kann die Pitch-Zapfenaufnahme im Wesentlichen Metall und/oder Metalllegierungen aufweisen.

Unter "im Wesentlichen" wird hier insbesondere verstanden, dass der Anteil an Metall und/oder Metalllegierungen mindestens 50% an den gesamten Materialien der rotorblattseitigen Pitch-Zapfenaufnahme ist.

Neben den bereits oben beschriebenen Vorteilen, wird dadurch ermöglicht, dass das Rotorblatt und die rotorblattseitige Pitch-Zapfenaufnahme aus demselben Metall und/oder derselben Metalllegierung gefertigt werden.

Durch die Fertigung des Rotorblattes und der rotorblattseitigen Pitch-Zapfenaufnahme aus demselben oder aus zueinander verträglichen unterschiedlichen Metallen und/oder Metalllegierungen treten keine Übergangsproblem zwischen den Materialien auf und es besteht eine feste Verbindung zwischen der rotorblattseitigen Pitch-Zapfenaufnahme und dem Rotorblatt. Somit sind das Rotorblatt und die rotorblattseitige Pitch-Zapfenaufnahme in einfacher Weise fest verbindbar oder einstückig ausführbar.

Insbesondere dadurch, dass das Rotorblatt frei von einem stromführenden Bauteil, insbesondere frei von einem steuernden und/oder regelnden und/oder leistungsversorgendem Bauteil, ausgeführt ist, ist eine einfachere Konstruktion und Ausführung des Rotorblattes und der Verbindung zur Rotornabe möglich.

Wie oben erwähnt, sind Rotorblätter mit Blitzableitern ausgestattet, welche die Aufgabe haben, den Strom von einem Blitz ohne Schädigung der Windkraftanlage abzuleiten. Ein Blitzableiter unterscheidet sich deutlich von der vorliegenden steuernden und/oder regelnden und/oder leistungsversorgenden Funktion eines stromführenden Bauteiles, sodass dieser in dieser Ausführungsform dennoch vorgesehen sein kann.

Dieses stromführende Bauteil hat eine konkrete steuernde, regelnde oder leistungsversorgende Funktion innerhalb der Windenergieanlage, welche gezielt eingesetzt wird. Zum Beispiel kann es sich hierbei um einen Pitch-Antrieb oder um die Versorgung von Sensoren handeln.

Dadurch, dass diese stromführenden Bauteile nicht in das Rotorblatt eingebaut werden, tritt kein Verdrillen von Leitungen auf. Zudem entfällt ein Führen von Leitungen durch die Rotornabe zum Rotorblatt.

Ein pitchfähiges Rotorblatt frei von einem stromführenden Bauteil lässt sich vorteilhaft durch einen elektromagnetischen Pitch-Antrieb realisieren.

Wie oben beschrieben, ermöglicht der Pitch-Antrieb die Windrichtungsnachführung und Drehung der Rotorblätter.

"Elektromagnetisch" bedeutet insbesondere, dass ein stromdurchflossener Leiter, insbesondere eine Spule, ein Magnetfeld in seiner Umgebung erzeugt.

Somit ist weder ein eingangsbeschriebener elektrischer Pitch-Antrieb noch ein hydraulischer Pitch-Antrieb erforderlich, bei dem eine mechanische Kräfteübertragung von der Rotornabe auf das Rotorblatt oder umgekehrt erfolgt.

Folglich kann der Pitch-Antrieb einfacher und insbesondere ohne direkte Leitungsverbindung oder direkte mechanische Kräfteübertragung zwischen Rotornabe und Rotorblatt ausgeführt werden.

Eine Ausgestaltungsform dafür ist, dass der Pitch-Antrieb durch eine Spule und einem der Spule zugeordneten Permanentmagneten gebildet ist, wobei insbesondere der Permanentmagnet rotorblattseitig und die Spule rotornabenseitig angeordnet ist.

Eine "Spule" besteht insbesondere aus mehreren in Reihe geschalteter Windungen. Eine stromdurchflossene Spule bildet ein magnetisches Feld aus und ist somit ein Elektromagnet.

Ein "Permanentmagnet" (auch Dauermagnet genannt) ist insbesondere ein Magnet aus einem Stück eines hartmagnetischen Materials, zum Beispiel Legierungen aus Eisen, Kobalt, Nickel oder bestimmten Ferriten. Ein Permanentmagnet besitzt und behält ein statisches Magnetfeld, ohne dass wie bei einem Elektromagnet ein zusätzlicher elektrischer Stromfluss benötigt wird.

Ein Permanentmagnet oder bevorzugt mehrere Permanentmagneten können im Blatt des Rotorblattes und/oder in oder an der rotorblattseitigen Pitch-Zapfenaufnahme angeordnet sein. Ein oder mehrere Spulen sind insbesondere dem Pitch-Zapfen zugeordnet und können dabei den Pitch-Zapfen umwickeln. Durch ein Bestromen der Spulen und dem daraus resultierenden Magnetfeld, kann dem Blatt des Rotorblattes eine Drehung aufgeprägt werden.

Besonders vorteilhaft ist, dass in dem Rotorblatt dann keine stromführenden Bauteile vorhanden sind und keine Leitungen geführt werden müssen, sondern sich lediglich passive Bauteile im Blatt befinden.

Selbstverständlich können auch umgekehrt die Spulen im Blatt angeordnet sein, welche durch die Antriebsspulen des Pitch-Antriebes beispielsweise mit einer Spannung beaufschlagt werden. Zudem kann eine Datenübertragung erfolgen.

Weiterhin ermöglichen die vorgeschlagenen Lösungen, dass die rotorblattseitige Pitch-Zapfenaufnahme stirnseitig einen Motor-Getriebe-Antrieb oder zwei oder mehrere Motor-Getriebe-Antriebe und der Pitch-Zapfen entsprechende Getriebeaufnahmen aufweist.

Durch die Anordnung eines oder mehrerer Motor-Getriebe-Antriebe in der rotorseitigen Pitch-Zapfenaufnahme ist gegenüber dem Stand der Technik, bei dem die Pitch-Motoren im Rotor angeordnet sind, eine platzsparende Realisierung möglich.

Zudem wird die Aufgabe gelöst durch eine Rotornabe, wobei die Rotornabe eine nabenseitige Pitch-Zapfenaufnahme aufweist, sodass ein beschriebenes Rotorblatt verbindbar ist.

Die "nabenseitige Pitch-Zapfenaufnahme" ist insbesondere ein Raum in der Rotornabe, in dem der Pitch-Zapfen, welcher insbesondere um eine Pitch-Achse angeordnet ist, eingeführt und befestigt werden kann. In der nabenseitigen Pitch-Zapfenaufnahme ist der Pitch-Zapfen gelagert oder mit dieser verbunden. An der nabenseitigen Pitch-Zapfenaufnahme können ein Lager oder mehrere Lager befestigt sein.

Besonders vorteilhaft ist die Ausführungsform der Rotornabe mit einem Pitch-Zapfen, sodass ein beschriebenes Rotorblatt verbindbar ist.

Dadurch können die Rotornabe und der Pitch-Zapfen einstückig aus einem Material gefertigt werden.

In einer weiteren Ausführungsform weist die Rotornabe ein Schräglager auf, sodass in dem eingebauten Zustand die feste Verbindung zwischen der Rotornabe und dem Rotorblatt durch das Schräglager erfolgt.

Durch ein Schräglager oder mehrere Schräglager wird eine feste Verbindung zwischen Rotornabe und Rotorblatt gewährleistet. Dadurch können die wirkenden Kräfte optimal auf die Rotornabe übertragen werden.

Ebenso können mehrere Schräglager angeordnet sein, wobei diese rotornabenseitig an der nabenseitigen Pitch-Zapfenaufnahme und/oder an der rotorblattseitigen Pitch-Zapfenaufnahme angeordnet werden können.

Um eine elektrische Versorgung und die notwendigen Funktionen zu gewährleisten, ist ein elektrisches Bauteil oder sind mehrere elektrische Bauteile, insbesondere mindestens ein steuerndes und/oder regelndes und/oder leistungsversorgendes Bauteil, in der Rotornabe angeordnet.

Der Aufbau des elektrischen Bauteils ist bereits beschrieben worden. Es kann sich beispielsweise um eine Spule oder einen Pitch-Antrieb handeln.

Durch Anordnung eines elektrischen Bauteils in der Rotornabe kann eine einfache Leitungsführung im Rotor realisiert werden. Das übliche Problem der Verdrillung von Leitungen bei Leitungsführung von der Rotornabe zum Rotorblatt tritt hier nicht auf, sofern das Rotorblatt lediglich mit passiven Bauteilen ausgestaltet ist. Unter passiven Bauteil wird insbesondere ein Bauteil verstanden, welches nicht durch eine elektrische Leitung verbunden ist (wie beispielsweise ein Permanentmagnet).

In einem zusätzlichen Aspekt der Erfindung wird die Aufgabe gelöst durch einen Antriebsstrang mit einem beschriebenen Rotorblatt und/oder einer beschriebenen Rotornabe, wobei der Antriebsstrang mindestens ein Getriebe und/oder mindestens einen Generator aufweist.

Unter einem "Getriebe" wird insbesondere ein Übersetzungsgetriebe zur Einstellung der Drehzahl verstanden. Durch die Drehzahlerhöhung für den Generator kann ein Läufer des Generators schneller rotieren und der Generator insbesondere mit einem geringeren Durchmesser ausgelegt werden. Die Windenergieanlage kann auch ohne Getriebe ausgelegt werden, wenn ein Generator verwendet wird, der mit niedriger Drehzahl arbeiten kann.

Somit kann über den Antriebsstrang die auf das Rotorblatt wirkende Kraft in elektrische Leistung umgewandelt werden.

Gemäß einer Weiterbildung der Erfindung wird die Aufgabe gelöst durch ein Maschinenhaus für eine Windenergieanlage mit einem beschriebenen Rotorblatt und/oder einer beschriebenen Rotornabe und/oder einem beschriebenen Antriebsstrang.

Im "Maschinenhaus", auch als Gondel bezeichnet, sind insbesondere der Antriebsstrang, die elektrische Ausrüstung, die Rotorkopflagerung sowie die Hilfsausrüstung wie Kühlsysteme, Brandmelder und Feuerlöschanlagen und ähnliches installiert. Somit gewährleistet das Maschinenhaus die Funktion der Windenergieanlage und schützt die Bauteile vor Umwelteinflüssen wie beispielsweise Regen.

Auch kann die Aufgabe gelöst werden durch eine Windenergieanlage mit einem beschriebenen Rotorblatt und/oder einer beschriebenen Rotornabe und/oder einem beschriebenen Antriebsstrang und/oder einem beschriebenen Maschinenhaus.

Unter "Windenergieanlage", auch als Windkraftanlage bezeichnet, wird insbesondere eine Anlage verstanden, welche die auf die Rotorblätter der Anlage wirkende Kraft des Windes in elektrische Energie umwandelt und diese in das Stromnetz einspeist.

Somit kann durch die feste Verbindung durch Lager zwischen Rotorblatt und Rotornabe eine Übertragung der wirkenden Kraft des Windes, die Umwandlung in elektrische Energie und deren Einspeisung ins Stromnetz erfolgen.

Zudem kann durch die feste Verbindung die Windkraftanlage mit neuen Materialien ausgestaltet und somit können längere Standzeiten erzielt werden.

Des Weiteren kann die Erfindung durch einen Windenergieanlagenpark mit einer beschriebenen Windenergieanlage realisiert werden.

Ein "Windenergieanlagenpark" ist insbesondere eine räumliche Ansammlung von Windenergieanlagen. Diese können organisatorisch (durch einen Investor oder Betreiber) und/oder technisch (durch gemeinsame Einspeisung des elektrischen Stroms) eine Einheit bilden. Insbesondere können sogenannte Windparkeffekte entstehen, bei denen eine erste Anlage einen Einfluss auf eine nachgelagerte Anlage hat.

Durch Ausgestaltung des Windenergieanlagenparks mit mehreren erfinderischen Windenergieanlagen kann die vereinfachte Fertigung aufgrund der festen Verbindung mehrfach und dadurch produktiver durchgeführt werden.

Zudem kann aufgrund geringerer Materialausfälle und längeren Standzeiten eine höhere Einspeisung des erzeugten Stroms in das Stromnetz erzielt werden.

Im Weiteren wird die Erfindung anhand von Ausführungsbeispielen näher erläutert. Es zeigen
- Figur 1: eine stark schematische Schnittdarstellung einer Seitenansicht eines Teils eines Rotorblattes mit einer rotorblattseitigen Pitch-Zapfenaufnahme, welche mit dem Pitch-Zapfen einer Rotornabe fest verbunden ist, sowie einen elektromagnetischen Pitch-Antrieb,
- Figur 2: eine stark schematische Schnittdarstellung einer Seitenansicht eines Teils eines Rotorblattes mit einer rotorblattseitigen Pitch-Zapfenaufnahme, welches mit einem Pitch-Zapfen der Rotornabe fest verbunden ist sowie ein elektrischer Motor-Getriebe-Antrieb, und
- Figur 3: eine stark schematische Schnittdarstellung verschiedener alternativer Ausführungen des Rotorblattes mit rotorblattseitiger Pitch-Zapfenaufnahme, Schräglagern und Pitch-Zapfen sowie der Rotornabe mit Pitch-Zapfen und Schräglagern und nabenseitiger Pitch-Zapfenaufnahme.

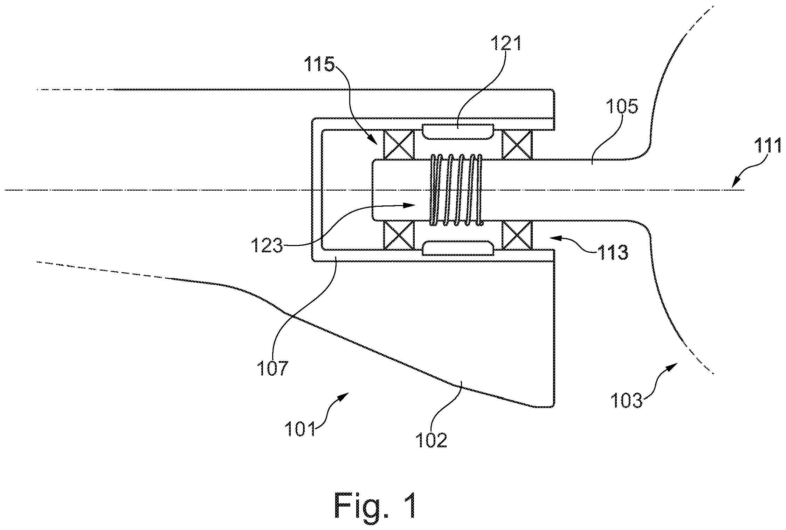

Ein Rotorblatt 101 weist ein Blatt 102 auf. Im Rotorblatt 101 ist eine rotorblattseitige Pitch-Zapfenaufnahme 107 angeordnet. An der rotorblattseitigen Pitch-Zapfenaufnahme 107 sind zwei Schräglager 113 und 115 befestigt. In den Schräglagern 113 und 115 ist der Pitch-Zapfen 105 eingespannt, welcher direkt mit der Rotornabe 103 verbunden ist. An der freien, nicht durch die Schräglager 113 und 115 belegten Oberfläche des Pitch-Zapfens 105 ist um den Pitch-Zapfen 105 eine Spule 123 gewickelt. An den der Spule 123 gegenüberliegenden Seiten der rotorblattseitigen Pitch-Zapfenaufnahme 107 sind mehrere Permanentmagneten 121 befestigt (aufgrund der Schnittdarstellung sind nur zwei Permanentmagneten in Figur 1 gezeigt). Das Rotorblatt 101 und die rotorblattseitige Pitch-Zapfenaufnahme 107 rotieren um die Rotationsachse 111, während die Rotornabe 103 um eine Antriebsstrangrotationsachse (nicht dargestellt) rotiert.

Das Blatt 102 und die rotorblattseitige Pitch-Zapfenaufnahme 107 sind aus Aluminium gefertigt. Die Rotornabe 103 und der Pitch-Zapfen 105 sind einstückig und aus Stahlguss gefertigt. Die Schräglager 113 und 115 sind fest mit der rotorblattseitigen Pitch-Zapfenaufnahme 107 verbunden. Die Schräglager 113 und 115 ermöglichen eine Rotation der rotorblattseitigen Pitch-Zapfenaufnahme 107 mit dem gesamten Rotorblatt 101 um den Pitch-Zapfen 105, sodass ein Pitchen ermöglicht wird.

Weiterhin wird die wirkende Kraft des Windes auf das Blatt 102 des Rotorblatts 101 übertragen und als Drehbewegung dem Pitch-Zapfen 105 und somit der Rotornabe 103 aufgeprägt, welche die Rotation einem nachfolgenden Generator (nicht dargestellt) eines Antriebsstrang (nicht dargestellt) überträgt.

Die Spule 123 (in Figur 1 sehr schematisch dargestellt), welche an dem Pitch-Zapfen 105 angeordnet ist, ist mittels Kabel bestrombar. Für den elektromagnetischen Pitch-Antrieb wird durch entsprechendes Bestromen der Spule 123 ein Magnetfeld induziert, welches in Verbindung mit den Permanentmagneten 121 in der rotorblattseitigen Pitch-Zapfenaufnahme 107 dem Blatt 102 eine Rotation um die Rotationsachse 111 aufprägt. Im Zusammenspiel von Spule 123 mit den Permanentmagneten 121 wird somit ein Pitch-Antrieb realisiert.

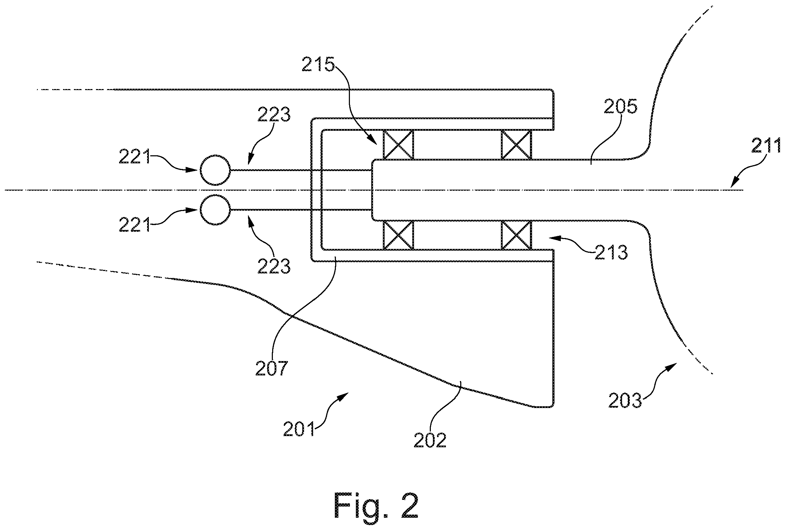

In einer zweiten Alternative sind anstelle des elektromagnetischen Pitch-Antriebes stirnseitig zur rotorblattseitigen Pitch-Zapfenaufnahme 207 blattseitig zwei Pitch-Motoren 221 und zwei zugehörige Getriebe 223 mit entsprechenden nabenseitigen Zahnrädern angeordnet (in Figur 2 nur stark schematisch dargestellt).

Dadurch, dass der Pitch-Motor elektrisch angetrieben wird, rotiert ebenfalls das Blatt 202 um die Rotationsachse 211 in Bezug zu dem Pitch-Zapfen 205 und ein entsprechender Drehwinkel ist ausbildbar.

Das Rotorblatt 301 und die jeweils zugehörige Rotornabe 303 sind in verschiedenen Alternativen herstellbar.

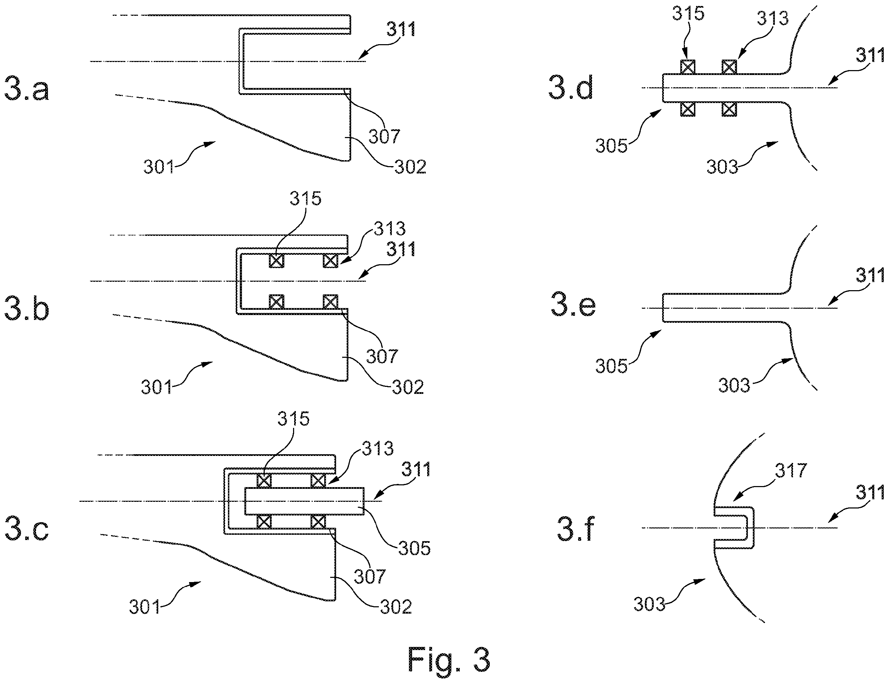

Das Rotorblatt 301 weist lediglich die rotorblattseitige Pitch-Zapfenaufnahme 307 auf (Figur 3.a). In der nächsten Produktionsstufe weist das Rotorblatt zusätzlich die Schräglager 313, 315 auf (Figur 3.b). In der letzten Alternativen (Figur 3.c) des Rotorblatts 301 ist bereits der Pitch-Zapfen 305 im Rotorblatt 301 vorgesehen.

Das Rotorblatt 301 weist jeweils das Blatt 302 auf und rotiert im eingebauten Zustand um die Rotationsachse 311. In allen Alternativen ist das Rotorblatt 301 klebend fest mit der rotorblattseitigen Pitch-Zapfenaufnahme 307 verbunden (Figur 3.a,b,c).

Im nicht eingebauten Zustand sind zwei Schräglager 313 und 315 an der rotorblattseitigen Pitch-Zapfenaufnahme 307 fest verbunden (Figur 3.b,c). Im eingebauten Zustand (nicht gezeigt) spannen die Schräglager 313 und 315 zusätzlich den Pitch-Zapfen 305 einer Rotornabe 303 (siehe Figur 3.d, e) und lagern so das Rotorblatt 301.

In einer Alternativen des Rotorblattes 301 ist ein Pitch-Zapfen 305 in den Schräglagern 313 und 315 gehaltert, welcher im nicht eingebauten Zustand noch nicht mit der Rotornabe 303 verbunden ist (Figur 3.c). Im eingebauten Zustand (nicht gezeigt) ist der Pitch-Zapfen 305 des Rotorblattes 301 in der nabenseitigen Pitch-Zapfenaufnahme 317 der Rotornabe 303 (siehe Figur 3.f) befestigt.

In einer Alternative der Rotornabe 303 ist der Pitch-Zapfen 305 direkt mit der Rotornabe 303 fest verbunden und einstückig aus demselben Material in einem Guss gefertigt (Figur 3.d, e). Im eingebauten Zustand (nicht gezeigt) wird der Pitch-Zapfen 305 (Fig. 3.e) durch die Schräglager 313 und 315 der rotorblattseitigen Pitch-Zapfenaufnahme 307 des Rotorblattes 301 eingespannt (siehe Fig. 3.b).

In einer weiteren Produktionsstufe der Rotornabe 303 weist der Pitch-Zapfen 305 der Rotornabe 303 selbst zwei Schräglager 313, 315 auf (Figur 3.d). Im eingebauten Zustand (nicht gezeigt) sind die beiden Schräglager 313 und 315 des Pitch-Zapfens 305 fest in der rotorblattseitigen Pitch-Zapfenaufnahme 307 des Rotorblattes 301 (Fig. 3.a) verbunden.

In einer dritten Alternative der Rotornabe 303 weist die Rotornabe 303 eine nabenseitige Pitch-Zapfenaufnahme 317 auf (Figur 3.f), in welcher der Pitch-Zapfen 305 eines Rotorblattes 301 (siehe Fig. 3.c) im eingebauten Zustand (nicht gezeigt) fest verbunden ist.

Durch die Alternativen des Rotorblattes 301 und der Rotornabe 303 ist die Hülle des Rotorblattes 301 aus Aluminium fertigbar und mit der Rotornabe 303 aus Stahlguss verbindbar, wobei der Pitch-Zapfen 305 durch Anordnung an das Rotorblatt 301 oder an die Rotornabe 303 je nach Belastung durch die auf das Rotorblatt 301 wirkende Kraft frei fertigbar ist. Bei hohen Belastungen wird insbesondere die erste oder zweite Alternative der Rotornabe 303 mit der einstückigen Fertigung des Pitch-Zapfen 305 und der Rotornabe 303 aus einem Guss (Figur 3.d, e) eingesetzt. Insbesondere bei niedrigen Belastungen ist eine nabenseitige Pitch-Zapfenaufnahme 317 der Rotornabe 303 (Fig. 3.f) möglich, in der der Pitch-Zapfen 305 eines Rotorblattes 301 (siehe Fig. 3.c) im eingebauten Zustand befestigt ist.

Des Weiteren ist gewährleistet, dass durch Variationen der Anzahl der Schräglager 313 und 315 sowie durch deren Positionierungen eine optimale Halterung des Pitch-Zapfens 305 in dem Rotorblatt 301 und an der Rotornabe 303 erzielt ist.

### Bezugszeichenliste

- 101: Rotorblatt
- 102: Blatt
- 103: Rotornabe
- 105: Pitch-Zapfen
- 107: rotorblattseitige Pitch-Zapfenaufnahme
- 111: Rotationsachse
- 113: Erstes Schräglager
- 115: Zweites Schräglager
- 121: Permanentmagneten
- 123: Spule
- 201: Rotorblatt
- 202: Blatt
- 203: Rotornabe
- 205: Pitch-Zapfen
- 207: rotorblattseitige Pitch-Zapfenaufnahme
- 211: Rotationsachse
- 213: Erstes Schräglager
- 215: Zweites Schräglager
- 221: Pitch-Motor
- 223: Getriebe
- 301: Rotorblatt
- 302: Blatt
- 303: Rotornabe
- 305: Pitch-Zapfen
- 307: rotorblattseitige Pitch-Zapfenaufnahme
- 311: Rotationsachse
- 313: Erstes Schräglager
- 315: Zweites Schräglager
- 317: nabenseitige Pitch-Zapfenaufnahme

## Patentansprüche

1. Rotorblatt (101, 201, 301) für eine Windenergieanlage, wobei das Rotorblatt eine rotorblattseitige Pitch-Zapfenaufnahme (107, 207, 307) aufweist und in einem eingebauten Zustand in der rotorblattseitigen Pitch-Zapfenaufnahme ein Pitch-Zapfen (105, 205, 305) einer Rotornabe (103, 203, 303) mittels eines Lagers (113, 115, 213, 215, 313, 315) gelagert ist, sodass eine feste Verbindung zwischen dem Rotorblatt und der Rotornabe durch das Lager erfolgt, um eine auf das Rotorblatt wirkende Kraft auf einen der Rotornabe nachfolgenden Generator zur Umwandlung in elektrische Energie zu übertragen, **dadurch gekennzeichnet, dass** in dem eingebauten Zustand das Rotorblatt einen elektromagnetischen Pitch-Antrieb aufweist, wobei der Pitch-Antrieb durch eine Spule (123) und einem der Spule zugordneten Permanentmagneten (121) gebildet ist und der Permanentmagnet an der rotorblattseitigen Pitch-Zapfenaufnahme und die Spule am Pitch-Zapfen oder umgekehrt angeordnet sind.

2. Rotorblatt nach Anspruch 1, **dadurch gekennzeichnet, dass** das Rotorblatt ein Lager, insbesondere Schräglager (113, 115, 213, 215, 313, 315) aufweist, sodass in dem eingebauten Zustand die feste Verbindung zwischen dem Rotorblatt und der Rotornabe durch das Lager erfolgt.

3. Rotorblatt nach Anspruch 1 und 2, **dadurch gekennzeichnet, dass** das Rotorblatt den Pitch-Zapfen aufweist, sodass in dem eingebauten Zustand das Rotorblatt und die Rotornabe über den Pitch-Zapfen fest verbunden sind.

4. Rotorblatt nach einem der vorherigen Ansprüche, **dadurch gekennzeichnet, dass** die rotorblattseitige Pitch-Zapfenaufnahme und der Pitch-Zapfen unterschiedliche Materialien aufweisen.

5. Rotorblatt nach einem der vorherigen Ansprüche, **dadurch gekennzeichnet, dass** das Rotorblatt im Wesentlichen Metall und/oder Metalllegierungen aufweist.

6. Rotorblatt nach einem der vorherigen Ansprüche, **dadurch gekennzeichnet, dass** die rotorblattseitige Pitch-Zapfenaufnahme im Wesentlichen Metall und/oder Metalllegierungen aufweist.

7. Rotorblatt nach einem der vorherigen Ansprüche, **dadurch gekennzeichnet, dass** das Rotorblatt frei von einem stromführenden Bauteil, insbesondere frei von einem steuernden und/oder regelnden und/oder leistungsversorgenden Bauteil, ausgeführt ist.

8. Rotornabe **gekennzeichnet durch** eine nabenseitige Pitch-Zapfenaufnahme (317), sodass ein Rotorblatt nach einem der Ansprüche 3 bis 7 verbindbar ist.

9. Rotornabe mit einem Pitch-Zapfen (305), sodass ein Rotorblatt nach einem der Ansprüche 1 bis 2 oder 4 bis 7 verbindbar ist.

10. Antriebsstrang mit einem Rotorblatt nach einem der Ansprüche 1 bis 7 und/oder einer Rotornabe nach einem der Ansprüche 8 oder 9, **dadurch gekennzeichnet, dass** der Antriebsstrang mindestens ein Getriebe und/oder mindestens einen Generator aufweist.

11. Maschinenhaus für eine Windenergieanlage mit einem Rotorblatt nach einem der Ansprüche 1 bis 7 und/oder einer Rotornabe nach einem der Ansprüche 8 oder 9 und/oder einem Antriebsstrang nach Anspruch 10.

12. Windenergieanlage mit einem Rotorblatt nach einem der Ansprüche 1 bis 7 und/oder einer Rotornabe nach einem der Ansprüche 8 oder 9 und/oder einem Antriebsstrang nach Anspruch 10 und/oder einem Maschinenhaus nach Anspruch 11.

13. Windenergieanlagenpark mit einer Windenergieanlage nach Anspruch 12.

## Claims

1. A rotor blade (101, 201, 301) for a wind turbine, wherein the rotor blade comprises has a rotor blade-side pitch pin receptacle (107, 207, 307) and, in a mounted state, a pitch pin (105, 205, 305) of a rotor hub (103, 203, 303) is mounted in the rotor blade-side pitch pin receptacle by means of a bearing (113, 115, 213, 215, 313, 315), so that a secure connection between the rotor blade and the rotor hub is carried out by means of the bearing, in order to transfer a force acting on the rotor blade to a generator downstream of the rotor hub to convert it into electrical energy, **characterized in that**, in the mounted state, the rotor blade has an electromagnetic pitch drive, wherein the pitch drive is formed by a coil (123) and a permanent magnet (121) assigned to the coil and the permanent magnet is disposed at the rotor blade-side pitch pin receptacle and the coil at the pitch pin or vice versa.

2. The rotor blade according to claim 1, **characterized in that** the rotor blade has a bearing, in particular an angular contact bearing (113, 115, 213, 215, 313, 315), so that, in the mounted state, the secure connection between the rotor blade and the rotor hub is carried out by means of the bearing.

3. The rotor blade according to claim 1 and 2, **characterized in that** the rotor blade comprises the pitch pin, so that, in the mounted state, the rotor blade and the rotor hub are securely connected by the pitch pin.

4. The rotor blade according to one of the afore-mentioned claims, **characterized in that** the rotor blade-side pitch pin receptacle and the pitch pin comprise different materials.

5. The rotor blade according to one of the afore-mentioned claims, **characterized in that** the rotor blade mainly comprises metal and/or metal alloys.

6. The rotor blade according to one of the afore-mentioned claims, **characterized in that** the rotor blade-side pitch pin receptacle mainly comprises metal and/or metal alloys.

7. The rotor blade according to one of the afore-mentioned claims, **characterized in that** the rotor blade is designed so that it is devoid of a conducting component, in particular devoid of an open-loop control and/or closed-loop control and/or power supply component.

8. A rotor hub **characterized by** a hub-side pitch pin receptacle (317), so that a rotor blade according to one of the claims 3 to 7 is connectable.

9. A rotor hub with a pitch pin (305), so that a rotor blade according to one of the claims 1 to 2 or 4 to 7 is connectable.

10. A drive train with a rotor blade according to one of the claims 1 to 7 and/or a rotor hub according to one of the claims 8 or 9, **characterized in that** the drive train has at least one transmission and/or at least one generator.

11. A nacelle for a turbine with a rotor blade according to one of the claims 1 to 7 and/or a rotor hub according to one of the claims 8 or 9 and/or a drive train according to claim 10.

12. A turbine with a rotor blade according to one of the claims 1 to 7 and/or a rotor hub according to one of the claims 8 or 9 and/or a drive train according to claim 10 and/or a nacelle according to claim 11.

13. A wind farm with a turbine according to claim 12.

## Revendications

1. Pale de rotor (101, 201, 301) pour une éolienne, la pale de rotor comportant un logement de pivot de réglage de calage (107, 207, 307) côté pale de rotor et, à l'état monté, un pivot de réglage de calage (105, 205, 305) d'un moyeu de rotor (103, 203, 303) étant monté dans le logement de pivot de réglage de calage côté pale de rotor au moyen d'un palier (113, 115, 213, 215, 313, 315), de sorte qu'une liaison solide entre la pale de rotor et le moyeu de rotor est assurée par le palier, afin de transmettre une force agissant sur la pale de rotor à un générateur en aval du moyeu de rotor pour la transformer en énergie électrique, **caractérisée en ce que** à l'état monté, la pale de rotor comporte un entraînement électromagnétique de réglage de l'angle de calage, où l'entraînement de réglage de l'angle de calage est formé par une bobine (123) et un aimant permanent (121) associé à la bobine, et l'aimant permanent est disposé au niveau du logement de pivot de réglage de calage côté pale de rotor et la bobine au niveau du pivot de réglage de calage ou vice-versa.

2. Pale de rotor selon la revendication 1, **caractérisée en ce que** la pale de rotor comporte un palier, en particulier un roulement à contact oblique (113, 115, 213, 215, 313, 315), de sorte qu'à l'état monté, la liaison solide entre la pale de rotor et le moyeu de rotor est assurée par le palier.

3. Pale de rotor selon la revendication 1 et 2, **caractérisée en ce que** la pale de rotor comporte le pivot de réglage de calage, de sorte qu'à l'état monté, la pale de rotor et le moyeu de rotor sont reliés solidement par le pivot de réglage de calage.

4. Pale de rotor selon l'une des revendications précédentes, **caractérisée en ce que** le logement de pivot de réglage de calage côté pale de rotor et le pivot de réglage de calage comportent des matériaux différents.

5. Pale de rotor selon l'une des revendications précédentes, **caractérisée** en ce la pale de rotor comporte essentiellement du métal et/ou des alliages de métaux.

6. Pale de rotor selon l'une des revendications précédentes, **caractérisée** en ce le logement de pivot de réglage de calage côté pale de rotor comporte essentiellement du métal et/ou des alliages de métaux.

7. Pale de rotor selon l'une des revendications précédentes, **caractérisée** en ce la pale de rotor est réalisée de manière à être exempte d'un composant conducteur, en particulier exempte d'un composant de commande et/ou de régulation et/ou d'alimentation en puissance.

8. Moyeu de rotor **caractérisé par** un logement de pivot de réglage de calage (317) côté moyeu, auquel une pale de rotor selon l'une des revendications 3 à 7 peut être connectée.

9. Moyeu de rotor avec un pivot de réglage de calage (305) auquel une pale de rotor selon l'une des revendications 1 à 2 ou 4 à 7 peut être connectée.

10. Chaîne cinématique avec une pale de rotor selon l'une des revendications 1 à 7, et/ou un moyeu de rotor selon l'une des revendications 8 ou 9, **caractérisée en ce que** la chaîne cinématique comporte au moins une transmission et/ou au moins un générateur.

11. Nacelle pour une éolienne avec une pale de rotor selon l'une des revendications 1 à 7 et/ou un moyeu de rotor selon l'une des revendications 8 ou 9 et/ou une chaîne cinématique selon la revendication 10.

12. Eolienne avec une pale de rotor selon l'une des revendications 1 à 7 et/ou un moyeu de rotor selon l'une des revendications 8 ou 9 et/ou une chaîne cinématique selon la revendication 10 et/ou une nacelle selon la revendication 11.

13. Parc d'éoliennes avec une éolienne selon la revendication 12.
